(19) Europäisches Patentamt
European Patent Office
Office européen des brevets

(11) EP 0 266 850 B2

(12) NEW EUROPEAN PATENT SPECIFICATION

(45) Date of publication and mention of the opposition decision:
**05.01.2000 Bulletin 2000/01**

(45) Mention of the grant of the patent:
**19.04.1995 Bulletin 1995/16**

(21) Application number: **87202167.0**

(22) Date of filing: **06.11.1987**

(51) Int Cl.[7]: **C08F 2/22**, D21H 17/34

# (54) A composite board comprising inorganic and/or cellulosic materials and a latex composition as a binder, said composite board having dimensional stability and strength

Verbundplatte mit Formbeständigkeit und Formfestigkeit enthaltend anorganische und/oder Zellulose-haltige Materialien und als Bindemittel eine Latexzusammensetzung

Panneau composé à stabilité et solidité dimensionelles contenant materiaux inorganique et/ou cellulose et comme liant une composition de latex

(84) Designated Contracting States:
**BE DE ES FR GB IT NL SE**

(30) Priority: **07.11.1986 US 928237**

(43) Date of publication of application:
**11.05.1988 Bulletin 1988/19**

(73) Proprietor: **THE DOW CHEMICAL COMPANY**
**Midland, Michigan 48674 (US)**

(72) Inventors:
- **Beyersdorf, Robert S.**
  **Midland Michigan 48640 (US)**
- **Keskey, William H.**
  **Midland Michigan 48640 (US)**

(74) Representative:
**Smulders, Theodorus A.H.J., Ir. et al**
**Vereenigde Octrooibureaux**
**Nieuwe Parklaan 97**
**2587 BN 's-Gravenhage (NL)**

(56) References cited:
**EP-A- 0 044 399**
**EP-A- 0 062 106**
**EP-A- 0 115 704**
**EP-A- 0 123 234**
**EP-A- 0 178 612**
**DD-A- 156 977**
**DE-A- 3 314 373**
**DE-A- 3 438 388**
**DE-A- 3 506 710**
**DE-A- 3 603 433**
**US-A- 4 587 778**

- **Ullmann's Encyclopädie der Technischen Chemie, Vol. 19, 1980. p. 18**

EP 0 266 850 B2

## Description

This invention relates to composite boards containing inorganic and cellulosic materials, and comprising a latex composition as a binder.

Starch is well known in the art as a binder for composite boards such as ceiling tile. However, under certain environmental conditions, like increased temperature and humidity, the boards lose dimensional stability, e.g., ceiling tile with starch binder sags. At the same time, the board is also required to have adequate strength, e.g., good modulus of rupture, to withstand normal handling and use.

Accordingly, it would be desirable to develop a binder composition to serve as a partial or complete replacement for starch which produces a composite board having adequate strength and dimensional stability with increased temperature and humidity.

EP-A 0 178 612 corresponding to DE-A-3 438 388, describes a composite board comprising a binder having a Tg (glass transition temperature) of between 60 and 110°C, salts of polyvalent metals and $C_{12}$-$C_{36}$ carboxylic acids; and mineral fibers. Said carboxylic acid salts are not required or used in the composition board of the present invention to obtain the desired physical characteristics.

EP-A 0 123 234 corresponding to DE-A-3 314 373, describes a composite board comprising a binder having a Tg of between 30 and 80°C and mineral fibers.

Both prior art documents teach the use of a binder comprising 60-100 weight percent of (meth)acrylates having 1-4 carbon atoms in the alcoholic group and 0-40 weight percent of (meth)acrylonitrile and/or styrene. According to the present invention, the presence of at least 60 percent (meth)acrylates in the binder appears to be not essential at all. Contrary to the teaching of both EP-A's cited, composition boards having the desirable characteristics aimed at according to the present invention are hereinbelow disclosed, wherein (meth)acrylates are absent or are present in low percentages by weight.

A similar copolymer is described in DE-A-3 603 433 wherein it is used together with 5-30 wt.% cement in construction boards.

EP-A 0 115 704 relates to a latex composition comprising an aqueous dispersion of 80-95 percent by weight of styrene, and 5-20 percent by weight of a butadiene. The copolymer particles have a Tg of between 45 and 65°C. The latex compositions described are used as toner resins.

In EP-A 0 044 399 a specific copolymer is described, essentially consisting of:

31-64 weight percent of at least one vinyl aromatic unit;
24-65 weight percent of at least one ester of an α,β-ethylenically unsaturated, 3-5 carbon atoms containing mono- or dicarboxylic acid with a $C_1$-$C_{14}$ monoalcohol, which ester is free of carboxylic acid groups;
4-30 weight percent of at least one carboxylic groups containing α,β-ethylenically unsaturated compound having 3-14 carbon atoms; and
0-5 weight percent of other α,β-ethylenically unsaturated compounds. The copolymer is further defined by a number of parameters. This prior art copolymer composition may be used as a paint or impregnating agent. Thereto, the copolymer is solubilised in an organic solvent and neutralized with ammonia.

Finally, DE-OS 35 06 710 describes a copolymer latex composition for use in a paper coating mass. In the first paragraph of page 9 of this DE-OS it is mentioned that the copolymer latex itself is a binder for paper. For this purpose, it is necessary that the copolymer latex is in the form of heterogeneous particles, which are obtained by graft polymerisation.

The present invention relates to a composition board as defined in claim 1.

The resulting composite board has sufficient strength for necessary handling and use and maintains dimensional stability with increased temperature and humidity.

In addition, the present invention relates to a process for preparing the composite board of the invention as defined in claim 4.

What is meant by "dimensional stability" is a lack of movement of the composite board when exposed to increased temperature and humidity. Dimensional stability can be measured by evaluating sag resistance of the composite board. Sag resistance is determined by exposing a $1\frac{1}{2}$ x 6-inch (40 mm x 150 mm) strip of composite board of the composition described in Example 1 to 94°F (35°C), 90 percent relative humidity for 96 hours, holding 330 g of weight and then measuring the displacement of the center of the board in millimeters (mm). The composite board will sag less than 0.8 mm and, preferably, less than 0.5 mm.

What is meant by "strength" is that the resulting composite board of the composition has the integrity necessary to withstand handling, processing and other forces that are applied to the composite board. The necessary strength can be determined by measuring the modular of rupture (MOR) of the composition board by ASTM 367-78. Preferably, the composite board has a modulus of rupture (MOR) of at least 130 psi (0.90 MPa). More preferably, the composite

board has an MOR of at least 140 psi (0.96 MPa). The most preferred MOR is at least 150 psi (1.0 MPa).

MOR is calculated from the standard 3 point breaking loading test described in ASTM 367-78 as follows:
Modulus of Rupture (MOR) = 3 $PL/bd^2$ where:

P = peak force required to break the sample (lb)
L = span between the sample supports (in)
b = width of the sample (in)
d = thickness of the sample.

This modulus of rupture is corrected for density variation as shown:
MOR corrected = (MOR) $D^2$ where D is the density correction
D = desired density/actual density

The glass transition temperature ($T_g$) of the copolymer of latex of the present invention is defined functionally as that $T_g$ which is sufficient to maintain the dimensional stability of the resulting composite board when it is exposed to specific environmental conditions and to provide the resulting composite board with a modulus of rupture of at least 130 psi (0.90 MPa) as measured by ASTM 367-78. The $T_g$ of the latex polymer is from 50°C to 115°C, preferably from 50°C to 110°C.

The latex copolymer composition to be used in the present invention can be prepared by a conventional emulsion polymerization process in aqueous medium with conventional additives. Typically, the aqueous phase will contain from 0.5 to 5 weight percent (based on the monomer charge) of conventional nonionic or anionic emulsifiers (e.g., potassium N-dodecyl sulfonate, sodium isooctobenzene sulfonate, sodium laurate and nonyl phenol ethers of polyethylene glycols).

Conventional emulsion polymerization catalysts can be employed in the foregoing latex polymerization and common examples thereof include peroxides, such as hydrogen peroxide; persulfates, such as sodium persulfate, potassium persulfate and ammonium persulfate; and azo compounds, such as azodiisobutyric diamide. Catalysts (e. g.. redox catalysts) which are activated in the water phase (e.g., by a water-soluble reducing agent) can be employed also. The type and amount of catalyst, as well as the particular polymerization conditions employed, will typically depend on the other monomers which are used and polymerization conditions will be generally selected to favor the polymerization of such other monomers. Typically, such catalysts are employed in a catalytic amount, e.g., ranging from 0.01 to 5 weight percent based upon the monomer weight. In general, the polymerization is conducted at a temperature in the range of from -10° to 110°C, preferably from 50° to 90°C.

Similarly, conventional chain transfer agents such as, for example, n-dodecyl mercaptan, bromoform, and carbon tetrachloride can also be employed in the normal fashion in polymerization to regulate the molecular weight of the polymer formed therein and, typically, when such chain transfer agents are used, they are employed in amounts ranging from 0.01 to 10, preferably from 0.1 to 5 weight percent based upon the weight of the monomers employed in the polymerization. The amount of chain transfer agent employed depends somewhat on the particular transfer agent employed and the particular monomers being polymerized.

Similarly, conventional cross-linking agents, which can be a di-, tn- or tetra-vinyl compound, can also be employed in the normal fashion in polymerization to regulate the $T_g$ and the molecular weight of the polymer formed therein. Representative examples of cross-linking agents are divinylbenzene, allyl methacrylate or a mono-, di-, tri- or tetraethylene glycol diacrylate or dimethacrylate. Typically, when such cross-linking agents are used, they are employed in amounts ranging from 0.01 to 4.0, preferably from 0.1 to 1.0 weight percent based upon the weight of the monomers employed in the polymerization. The amount of cross-linking agent employed depends on the monomers being polymerized.

The latex composition used as a binder in the composite board of the present invention with a sufficient $T_g$ is prepared with a combination of hard monomer and soft monomer. An α,β-ethylenically unsaturated carboxylic acid is also incorporated.

The term "hard monomer" is meant to include a monomer whose homopolymer has a $T_g$ of at least 80°C and the term "soft monomer" is meant to include a monomer whose homopolymer has a $T_g$ less than 35°C. Typical hard monomers are those conventionally known in the art, for example styrene and methyl methacrylate. Soft monomers are also conventionally known in the art and include, for example, butadiene, ethyl acrylate or butyl acrylate.

The α,β-ethylenically unsaturated carboxylic acids include compositions of the formula:

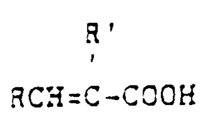

where

R is H and R' is H, $C_1$-$C_4$ alkyl, or -$CH_2COOX$;
R is -COOX and R' is H or -$CH_2COOX$; or,
R is $CH_3$ and R' is H; and
X is H or $C_1$-$C_4$ alkyl.

Suitable α,β-ethylenically unsaturated aliphatic carboxylic acids are monoethylenically unsaturated monocarboxylic, dicarboxylic and tricarboxylic acids having the ethylenic unsaturation α,β to at least one of the carboxyl groups and similar monomers having a higher number of carboxyl groups. It is understood that the carboxyl groups may be present in the acid or salt form (-COOM in which M represents hydrogen or a metal, such as for example, sodium or potassium) and are readily interconvertible by well known simple procedures.

Specific examples of the α,β-ethylenically unsaturated aliphatic carboxylic acids are acrylic acid, methacrylic acid, fumaric acid, itaconic acid, maleic acid, aconitic acid, various α-substituted acrylic acids sucn as α-ethacrylic acid, α-propyl acrylic acid and α-butyl acrylic acid.

The latex composition typically includes from 50 to 99 weight percent of a hard monomer and from 1 to 50 weight percent of a soft monomer, based on the weight of the composition. The carboxylic acid level may be from 0 to 20 weight percent. Preferably, the hard monomer is present in an amount of from 65 to 95 weight percent, the soft monomer is present in an amount of from 5 to 35 weight percent and the carboxylic acid is present in an amount more preferably of from 0.5 to 10 weight percent, all based on the weight of the composition.

A particular copolymer family suitable for the latex of the present invention is a copolymer comprising a monovinylidene monomer, an aliphatic conjugated diene, and an α,β-ethylenically unsaturated carboxylic acid termonomer.

The term "monovinylidene monomer" is intended to include those monomers wherein a radical of the formula:

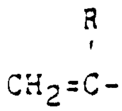

(wherein R is hydrogen or a lower alkyl such as an alkyl having from 1 to 4 carbon atoms) is attached directly to an aromatic nucleus containing from 6 to 10 carbon atoms, including those wherein the aromatic nucleus is substituted with alkyl or halogen substituents. Typical of these monomers are styrene, α-methylstyrene, ortho-, meta- and paramethylstyrene; ortho-, meta- and paraethylstyrene; o,p-dimethylstyrene; o,p-diethylstyrene; isopropylstyrene; o-methyl-p-isopropylstyrene; p-chlorostyrene; p-bromostyrene; o,p-dichlorostyrene; o,p-dibromostyrene; vinylnaphthalene; diverse vinyl (alkylnaphthalenes) and vinyl (halonaphthalenes) and comonomeric mixtures thereof.

Acyclic aliphatic conjugated dienes usefully employed herein include typically those compounds which have from 4 to 9 carbon atoms, for example, 1,3-butadiene, 2-methyl-1,3-butadiene; 2,3-dimethyl-1,3-butadiene; pentadiene; 2-neopentyl-1,3-butadiene and other hydrocarbon analogs of 2,3-butadienes, such as 2-chloro-1,3-butadiene; 2-cyano-1,3-butadiene, the substituted straight chain conjugated pentadienes, the straight chain and branched chain conjugated hexadienes, other straight and branched chain conjugated dienes having from 4 to 9 carbon atoms, and comonomeric mixtures thereof. The 1,3-butadiene hydrocarbon monomers such as those mentioned hereinbefore provide interpolymers having particularly desirable properties and are therefore preferred. The cost, ready availability and the excellent properties of interpolymers produced therefrom makes 1,3-butadiene the most preferred acyclic aliphatic conjugated diene.

Additional monomers can be added to any of the families of copolymers described above, such as, for example the termonomers having homopolymers with an intermediate $T_g$ of greater than 25°C but less than 80°C. Examples of these monomers include 4-biphenyl acrylate, tert-butyl acrylate, vinyl acetate, sec-butyl methacrylate, cyclohexyl methacrylate, ethyl methacrylate, isobutyl methacrylate, propyl methacrylate, isobutyl methacrylate, n-propyl methacrylate and tert-butyl amino ethyl methacrylate.

The composite board, e.g. ceiling tiles, can be prepared by any conventional process, such as, for example, water-felted formed on a Fourdrinier process, water-borne (slurried in water) process or cast molded process.

The inorganic and cellulosic materials of the composite are conventionally known fillers and fibers. For example, mineral wool (inorganic fiber), perlite or clay (inorganic fillers) and cellulose (cellulosic material).

Typical amounts of the binder are from 1 to 25 percent by weight; the cellulosic material. from 5 to 50 percent by weight; the inorganic fiber, from 10 to 70 percent by weight; and the inorganic filler, from 5 to about 90 percent by weight, based upon the total weight of the composite board.

The binder system is not limited exclusively to the latex but rather the latex may be all or part of the binder system, e.g. latex plus starch.

Ceiling tile is prepared by dispersing newsprint and mixing the dispersion with inorganic and cellulosic material. To this mixture was added the latex, then the flocculant, and the resultant furnish was poured into a mold, diluted and drained. The resultant wet mat was then pressed and dried.

The invention is further illustrated, but is not limited by the following examples wherein all parts and percentages are by weight unless otherwise specified.

Example 1

Into a 1-liter glass reactor immersed in a temperature controlled water bath were added 359 g of deionized water, 3.0 g of a 1 percent active aqueous pentasodium diethylene triamine pentaacetate solution, and 3.0 g of fumaric acid. The reactor was heated to 60°C to dissolve the fumaric acid and then add 4.5 g of a 33.2 percent solids seed latex containing polystyrene polymer particles was added . The reactor was purged with nitrogen and heated to 85°C and a monomer stream containing 270 g of methyl methacrylate and 27 g of ethyl acrylate was added over a 2-hour period.

Beginning at the start of the monomer addition was added over a 2 1/6-hour period, an aqueous stream containing 90.0 g deionized water, 1.5 g sodium persulfate, 0.3 g sodium hydroxide and 3.3 g of a 45 percent active surfactant solution. Following the addition of the monomer and aqueous streams, the reactor was maintained at 85°C for 1 hour, then cooled.

The latex was then incorporated as the binder into ceiling tiles in the following manner:

Printed newsprint was dispersed in water at 2.0 percent solids. A Cowles blade was used with an air stirrer at high rpm to redisperse the cellulose to a Canadian Standard Freeness of 250-300 mls. Water (4,000 ml), clay (6.0 g), perlite (37.5 g), mineral wool (75.0 g), and the dispersed newsprint (825 ml, 16.5 g of fiber) were mixed for three minutes with moderate agitation using a Cowles blade. Latex (15.0 g of polymer) was added and the slurry was mixed for 30 seconds. Flocculant (cationic polyacrylamide) was added until the latex was completely flocculated (determined by the point when the water became clear). Flocculation was carried out with less than moderate agitation. The flocculated furnish was poured into a Williams Sheet mold apparatus and was diluted to approximately 2.0 percent solids. The furnish was dispersed and drained on a retaining wire. The wet mat was pressed to a thickness of 630 mils (16 mm) and dried at 375° to 400°F (190° to 205°C) in a forced air oven. The resulting board was approximately 8.2 x 8.2 inches (208 x 208 mm), had a thickness of 0.7 inches (18 mm) and a density of 12 $lbs/ft^3$ (19 $kg/m^3$).

Example 2

Into a 1-liter glass reactor immersed in a temperature controlled water bath were added 359 g of deionized water, 3 g of a 1 percent active aqueous pentasodium diethylenetriamine pentaacetate solution and 5.06 g of a 27 percent solids seed latex containing polystyrene polymer particles. The reactor was purged with nitrogen and heated to 90°C. Then, a monomer stream containing 255 g of styrene, 18 g acrylic acid and 27 g of ethyl acrylate was added over a 3-hour period.

Beginning at the start of the monomer addition was also added over a $3\frac{1}{4}$-hour period, an aqueous stream containing 90 g of deionized water, 1.5 g of sodium persulfate, 0.3 g sodium hydroxide and 3.3 g of a 45 percent active surfactant solution. Following the addition of the monomer and aqueous streams, the reactor was maintained at 90°C for 30 minutes, then cooled.

A ceiling board was then formulated in the manner described in Example 1.

Ceiling boards were prepared as in Example 1 from the following latexes:

TABLE I

| Ceiling Board Evaluation | | | | |
|---|---|---|---|---|
| Example | Binder | $T_g$ | MOR psi (MPA) | Sag (mm) |
| 1 | MMA/EA/FA 90/9/1 | 106 | 170(1.17) | 0.2 |
| 2 | S/EA/AA 85/9/6 | 104 | 182 (1.25) | 0.1 |
| 3 | S/BA/AA 70/24/6 | 71 | 175 (1.21) | 0.1 |
| 4 | S/EA/FA 90/9/1 | 98 | 159 (1.10) | 0.1 |
| 5 | MMA/EA/FA 80/19/1 | 82 | 151 (1.04) | 0.5 |
| 6 | MMA/EA/FA 75/24/1 | 78 | 163 (1.12) | 0.7 |
| Comp. Ex. C | MMA/BA/FA 65/34/1 | 57 | 175 (1.21) | 1.0 |

TABLE I (continued)

| Ceiling Board Evaluation | | | | |
|---|---|---|---|---|
| Example | Binder | $T_g$ | MOR psi (MPA) | Sag (mm) |
| 8 | S/B/AA 88/10/2 | 86 | 150 (1.03) | 0.3 |
| Comp. Ex. D | S/B/AA 81/17/2 | 45 | 138 (0.95) | 1.0 |
| Comparative A | Starch - | -- | 135 (0.93) | 1.2 |
| Comparative B | S/IA 99/1 | 106 | 100 (0.69) | 0.8 |

TABLE II

| Monomer Terms | |
|---|---|
| (S) | styrene |
| (B) | butadiene |
| (MMA) | methyl methacrylate |
| (EA) | ethyl acrylate |
| (BA) | butyl acrylate |
| (AA) | acrylic acid |
| (IA) | itaconic acid |
| (FA) | fumaric acid |

The table above indicates starch-containing ceiling tile (Comparative A) had a high MOR (high strength) but little sag resistance. The polystyrene latex binder-containing ceiling tile (Comparative B) had moderate sag resistance but a low MOR (little strength).

The latex binders of the invention (Examples 1 to 9) have both excellent strength (high MOR) and little sag, i.e,. an MOR of at least 130 psi (0.90 MPa) and a sag of 1 mm or less. Example 3, a copolymer of styrene, butyl acrylate and acrylic acid (70/24/6), is illustrative of the combination of high binder strength - an MOR of 175 psi (1.21 MPa) and high sag resistance - 0.1 mm sag.

An entirely different copolymer, Example 1, methyl methacrylate, ethyl acrylate and fumaric acid (90/9/1) also shows high binder strength - MOR of 170 psi (1.17 MPa) - and a high sag resistance - 0.2 mm sag.

## Claims

**1.** A composite board comprising inorganic and/or cellulosic materials and a latex binder, the latex binder comprising an aqueous dispersion of copolymer particles, the copolymer composition consisting of 50 to 99 weight percent of a hard monomer, having as a homopolymer a Tg of at least 80°C, and 1 to 50 weight percent of a soft monomer, having as a homopolymer a Tg of less than 35°C, wherein 0.5 to 20 wt.% is monoethylenically unsaturated monocarboxylic, dicarboxylic or tricarboxylic acid, having the ethylenic unsaturation $\alpha$, $\beta$ to at least one of the carboxylic acid group(s) COOM wherein M represents H or a metal, wherein the latex binder comprises:

a copolymer of a monovinylidene monomer, an aliphatic conjugated diene monomer and the $\alpha$,$\beta$-ethylenically unsaturated acid monomer;
a copolymer of methyl methacrylate, ethyl acrylate and fumaric acid;
a copolymer of styrene, ethyl acrylate and acrylic acid;
a copolymer of styrene, butyl acrylate and acrylic acid; or
a copolymer of styrene, ethyl acrylate and fumaric acid,

wherein the copolymer of the latex has a Tg of from 50°C to 115°C wherein the resulting composite board has a modulus of rupture of at least 0.9 MPa (130 psi) as measured by ASTM 367-78 whereby upon exposing a 40 mm x 150 mm (1.5 x 6 inch) strip of the composite board to 90% relative humidity at 35°C (94°F) for 96 hours, holding 330 g of weight, the composite sags less than 0.8 mm.

**2.** The composite board according to claim 1, comprising only cellulosic materials, or a combination of cellulosic materials and inorganic fibers and/or fillers.

3. The composite board according to claim 1 or 2, wherein the copolymer has a Tg of from 50°C to 110°C.

4. A process for preparing a composite board according to any one of claims 1-3, comprising:

(1) providing a dispersion of inorganic or cellulosic materials or a mixture of inorganic and cellulosic materials,
(2) adding to the dispersion a latex composition comprising an aqueous dispersion of copolymer particles, the copolymer composition consisting of 50 to 99 weight percent of a hard monomer, having as a homopolymer a Tg of at east 80°C, and 1 to 50 weight percent of a soft monomer, having as a homopolymer a Tg of less than 35°C, wherein 0.5 to 20 wt.% is monoethylenically unsaturated monocarboxylic, dicarboxylic or tricarboxylic acid, having the ethylenic unsaturation α,β to at least one of the carboxylic acid group(s) COOM wherein M represents H or a metal, which copolymer composition is selected from The group consisting of

a copolymer of a monovinylidene monomer, an aliphatic conjugated diene monomer and the α,β-ethylenically unsaturated acid monomer;
a copolymer of methyl methacrylate, ethyl acrylate and fumaric acid;
a copolymer of styrene ethyl acrylate and acrylic acid;
a copolymer of styrene, butyl acrylate and acrylic acid; or
a copolymer of styrene, ethyl acrylate and fumaric acid,

wherein the copolymer of the latex has a Tg of from 50°C to 115°C and a flocculant,
(3) pouring the resulting furnish into a mold, and
(4) diluting and draining the furnish.

## Patentansprüche

1. Verbundplatte, enthaltend anorganische Materialien und/oder Cellulosematerialien und einen Bindemittellatex, wobei der Bindemittellatex eine wäßrige Dispersion von Copolymerteilchen ist und die Copolymerzusammensetzung aus 50 bis 99 Gew.-% eines harten Monomeren, das als Homopolymer eine Tg von mindestens 80° C aufweist, und 1 bis 50 Gew.-% eines weichen Monomeren, das als Homopolymer eine Tg von unter 35° C aufweist, besteht, wobei 0,5 bis 20 Gew.-% eine monoethylenisch ungesättigte Monocarbonsäure, Dicarbonsäure oder Tricarbonsäure ist, die die ethylenische Ungesättigtheit in α,β-Stellung zu wenigstens einer der Carbonylgruppen COOM aufweist, wobei M für H oder ein Metall steht und wobei der Bindemittellatex enthält:

ein Copolymer aus einem Monovinylidenmonomer, einem aliphatisch konjugierten Dienmonomer und dem α, β-ethylenisch ungesättigten Säuremonomer,
ein Copolymer aus Methylmethacrylat, Ethylacrylat und Fumarsäure,
ein Copolymer aus Styrol, Ethylacrylat und Acrylsäure,
ein Copolymer aus Styrol, Butylacrylat und Acrylsäure oder
ein Copolymer aus Styrol, Ethylacrylat und Fumarsäure,

wobei das Copolymer des Latex eine Tg von 50°C bis 115°C aufweist, wobei die entstandene Verbundplatte einen Bruchmodul von mindestens 0,9 MPa (130 psi), gemessen nach ASTM 367-78, aufweist und ein 40 mm x 150 mm (1,5 x 6 Inch) großer Streifen der Verbundplatte, der 90 % relativer Luftfeuchte bei 35° C (94° F) ausgesetzt ist, nach 96 Stunden unter einer Gewichtsbelastung von 330 g weniger als 0,8 mm durchhängt.

2. Verbundplatte nach Anspruch 1, dadurch gekennzeichnet, daß sie nur Cellulosematerialien oder eine Kombination von Cellulosematerialien und anorganischen Fasern und/oder Füllstoffen enthält.

3. Verbundplatte nach Anspruch 1 oder 2, dadurch gekennzeichnet, daß das Copolymer eine Tg von 50° C bis 110° C aufweist.

4. Verfahren zum Herstellen einer Verbundplatte nach einem der Ansprüche 1 bis 3 durch:

(1) Vorlegen einer Dispersion anorganischer Materialien oder Cellulosematerialien oder einer Mischung anorganischer Materialien und Cellulosematerialien,
(2) Hinzugeben einer Latexzusammensetzung, die eine wäßrige Dispersion von Copolymerteilchen enthält, zu der Dispersion, wobei die Copolymerzusammensetzung aus 50 bis 99 Gew.-% eines harten Monomeren,

das als Homopolymer eine Tg von mindestens 80° C aufweist, und 1 bis 50 Gew.-% eines weichen Monomeren, das als Homopolymer eine Tg von unter 35° C aufweist, wobei 0,5 bis 20 Gew.-% eine monoethylenisch ungesättigte Monocarbonsäure, Dicarbonsäure oder Tricarbonsäure ist, die die ethylenische Ungesättigtheit in α,β-Stellung zu wenigstens einer der Carbonylgruppen COOM aufweist, wobei M für H oder ein Metall steht und die Copolymerzusammensetzung ausgewählt ist aus der Gruppe bestehend aus:

einem Copolymer aus einem Monvinylidenmonomer, einem aliphatisch konjugierten Dienmonomer und dem α,β-ethylenisch ungesättigten Säuremonomer,
einem Copolymer aus Methylmethacrylat, Ethylacrylat und Fumarsäure,
einem Copolymer aus Styrol, Ethylacrylat und Acrylsäure,
einem Copolymer aus Styrol, Butylacrylat und Acrylsäure oder
einem Copolymer aus Styrol, Ethylacrylat und Fumarsäure,

wobei das Copolymer des Latex eine Tg von 50° C bis 115° C aufweist, und einem Flockungsmittel besteht,
(3) Eingießen der erhaltenen Beschickung in eine Form und
(4) Verdünnen und Entwässern der Beschickung.

**Revendications**

**1.** Panneau composite comprenant des matières minérales et/ou cellulosiques et un latex en tant que liant, le latex liant comprenant une dispersion aqueuse de particules de copolymère, ledit copolymère comprenant 50 à 99 % en poids d'un monomère dur, présentant à l'état d'homopolymère une Tg d'au moins 80 °C, et 1 à 50 % en poids d'un monomère mou, présentant à l'état d'homopolymère une Tg inférieure à 35 °C, de 0,5 à 20 % en poids étant constitué par un acide monocarboxylique, dicarboxylique ou tricarboxylique à insaturation monoéthylénique où cette insaturation éthylénique est en α,β d'au moins l'un des groupes carboxyle -COOM où M représente H ou un métal, le latex liant comprenant :

- un copolymère d'un monomère monovinylidène, d'un monomère diène conjugué aliphatique et d'un monomère acide α,β-éthyléniquement insaturé,
- un copolymère de méthacrylate de méthyle, d'acrylate d'éthyle et d'acide fumarique,
- un copolymère de styrène, d'acrylate d'éthyle et d'acide acrylique,
- un copolymère de styrène, d'acrylate de butyle et d'acide acrylique,

ou

- un copolymère de styrène, d'acrylate d'éthyle et d'acide fumarique, le copolymère de latex présentant une Tg de 50 à 115 °C, le panneau composite résultant ayant un module de rupture, mesuré par la méthode ASTM 367-78, d'au moins 0,9 MPa (130 psi), et le composite s'affaissant de moins de 0,8 mm lorsqu'on expose une bande du panneau composite, de 40 mm x 150 mm (1,5 x 6 pouces), à une humidité relative de 90 % à 35°C (94°F) pendant 96 heures, la bande supportant une charge de 330 g.

**2.** Panneau composite selon la revendication 1, comprenant seulement des matières cellulosiques ou comprenant une combinaison de matières cellulosiques et de fibres et/ou charges minérales.

**3.** Panneau composite selon la revendication 1 ou 2, dans lequel le copolymère a une Tg de 50 à 110 °C.

**4.** Procédé de préparation d'un panneau composite selon l'une quelconque des revendications 1 à 3, comprenant :

(1) la fourniture d'une dispersion de matières minérales ou cellulosiques, ou d'un mélange de matières minérales et de matières cellulosiques,
(2) l'addition à la dispersion d'un latex comprenant une dispersion aqueuse de particules de copolymère, le copolymère comprenant 50 à 99 % en poids d'un monomère dur, présentant à l'état d'homopolymère une Tg d'au moins 80 °C, et 1 à 50 % en poids d'un monomère mou, présentant à l'état d'homopolymère une Tg inférieure à 35 °C, de 0,5 à 20 % en poids étant constitué par un acide monocarboxylique, dicarboxylique ou tricarboxylique à insaturation monoéthylénique où cette insaturation éthylénique est en α,β d'au moins l'un des groupes carboxyle -COOM où M représente H ou un métal, le copolymère étant choisi dans l'ensemble que forment :

- un copolymère d'un monomère monovinylidène, d'un monomère diène conjugué aliphatique et d'un monomère acide α,β-éthyléniquement insaturé,
- un copolymère de méthacrylate de méthyle, d'acrylate d'éthyle et d'acide fumarique,
- un copolymère de styrène, d'acrylate d'éthyle et d'acide acrylique,
- un copolymère de styrène, d'acrylate de butyle et d'acide acrylique,

et

- un copolymère de styrène, d'acrylate d'éthyle et d'acide fumarique, le copolymère de latex présentant une Tg de 50 à 115 °C,

et d'un floculant,
(3) l'introduction des matières résultantes dans un moule, et
(4) la dilution et l'essorage des matières.